# EUROPEAN PATENT APPLICATION

(11) **EP 3 222 381 A2**
(43) Date of publication of application: **27.09.2017**
(21) Application number: 17161136.1
(22) Date of filing: 15.03.2017
(51) Int. Cl.: B23K 9/04, B22F 3/105, B28B 1/00

(54) **ADDITIVE MANUFACTURING METHOD AND ADDITIVE MANUFACTURING MACHINE**

(30) Priority: 22.03.2016 TW 105108779
(71) Applicant: National Chung-Hsing University, Taichung City 402 (TW)
(72) Inventor: Wu, Wei-Te, 700 Tainan City (TW); Wu, Ti-Yuan, 412 Taichung City (TW)
(74) Representative: V.O.

(57) **Abstract**

An additive manufacturing method for making an additive object (7), which includes the steps of: introducing a mechanical wave to vibrate a holding platform (3) ; melting a raw material powder into a melted raw material; and depositing the melted raw material in multiple layers on the holding platform (3) vibrated by the mechanical wave to form the additive object (7).

## Description

The disclosure relates to the manufacture of an additive object, and particularly to an additive manufacturing method and an additive manufacturing machine for making the additive object.

Referring to FIG. 1, a conventional additive manufacturing machine 1 of Taiwanese Utility Model Patent No. M498668 includes a forming platform 11, a powder applying unit 12, a laser unit 13 and a striking unit 14. The powder applying unit 12 delivers a raw material powder onto the forming platform 11. Then the laser unit 13 melts the raw material powder to form a sintered object . The striking unit 14 strikes the sintered object to increase compactness of the sintered object.

However, striking the sintered object may deform or even damage the sintered object. Moreover, since the sintered object is produced by depositing multiple sintered layers, the striking procedure has to be repeatedly performed after formation of each layer, resulting in increased processing time.

Therefore, an object of the present disclosure is to provide an additive manufacturing method and an additive manufacturing machine that can alleviate at least one of the drawbacks associated with the prior art.

According to a first aspect of the present disclosure, an additive manufacturing method for making an additive object includes:
introducing a mechanical wave to vibrate a holding platform;
melting a raw material powder into a melted raw material; and
depositing the melted raw material in multiple layers on the holding platform vibrated by the mechanical wave to form the additive object.

According to a second aspect of the present disclosure, an additive manufacturing machine adapted to form an additive object includes:
a holding platform; and
an additive manufacturing device including
   a raw material supplying unit, and
   a melting unit including
      a gas delivering member,
      a chamber that receives an inert gas delivered by the gas delivering member and a raw material powder delivered by the raw material supplying unit and that supplies the raw material powder to the holding platform, and
      a melting gun that cooperates with the holding platform to generate a plasma transferred arc adapted to melt the raw material powder supplied from the chamber to form at least two deposited layers that constitute the additive object and that are disposed on the holding platform.

According to a third aspect of the present disclosure, an additive manufacturing machine adapted to form an additive object includes:
a holding platform;
an additive manufacturing device including a raw material supplying unit, and a melting unit for melting a raw material powder delivered by the raw material supplying unit to the holding platform to form at least two deposited layers that constitute the additive object; and
a vibrating unit that is in contact with the holding platform and that generates a mechanical wave transferred through the holding platform to the deposited layers.

Other features and advantages of the present disclosure will become apparent in the following detailed description of the embodiments with reference to the accompanying drawings, of which:

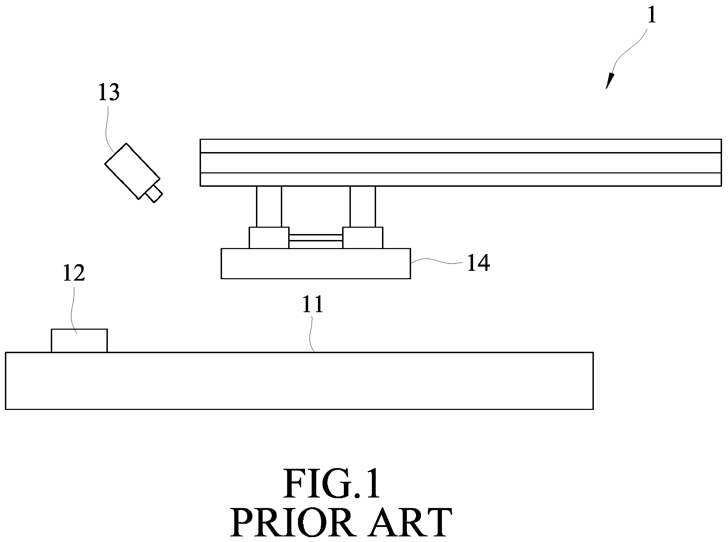

FIG. 1 is a schematic view of a conventional additive manufacturing machine according to Taiwanese Utility Model Patent No. M498668;
FIG. 2 is a schematic view of a first embodiment of an additive manufacturing machine according to the present disclosure that includes a melting unit generating a plasma transferred arc, and a vibrating unit;
FIG. 3 is a schematic view of a second embodiment of an additive manufacturing machine according to the present disclosure that includes a melting unit generating a laser beam, and a vibrating unit;
FIG. 4 is a schematic view of a third embodiment of an additive manufacturing machine according to the present disclosure that includes a melting unit generating a plasma transferred arc; and
FIGS. 5(a) to 5(c) show aplurality of additive objects respectively manufactured by a conventional additive manufacturing machine, the second embodiment and the first embodiment.

Before the disclosure is described in greater detail, it should be noted that where considered appropriate, reference numerals or terminal portions of reference numerals have been repeated among the figures to indicate corresponding or analogous elements, which may optionally have similar characteristics.

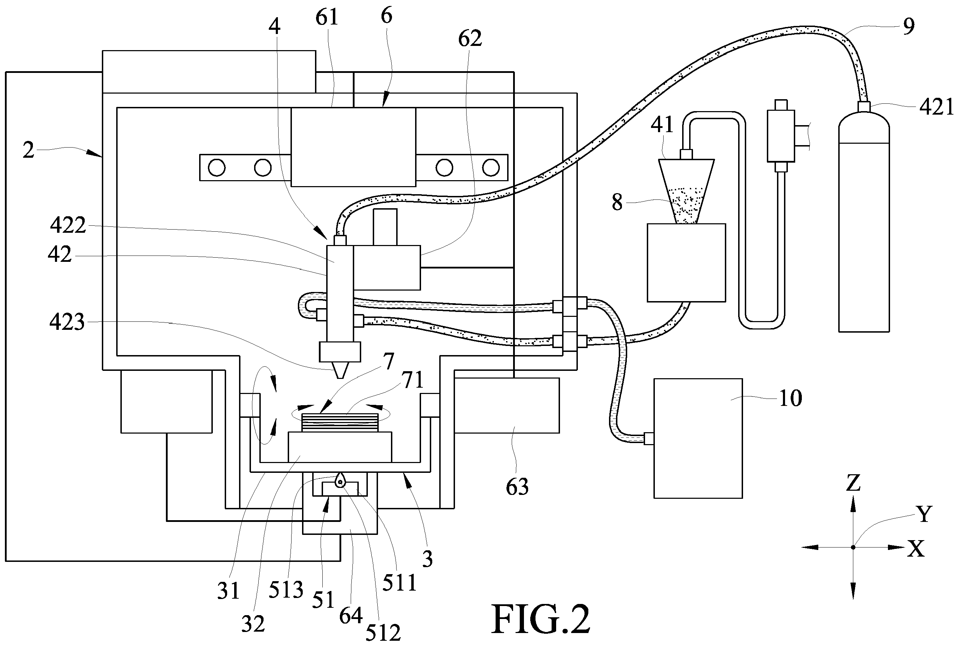

Referring to FIG. 2, a first embodiment of an additive manufacturing machine according to the present disclosure is adapted to form an additive object 7. The additive manufacturing machine includes a machine body 2, a holding platform 3, an additive manufacturing device 4, a vibrating unit 51 and a driving module 6.

The holding platform 3 includes a swing member 31 that is rotatably disposed on the machine body 2, and a carrier 32 that is co-rotatably disposed on the swing member 31.

The vibrating unit 51 is disposed on the machine body 2, and includes a motor 511, an eccentric cam 513 that is in contact with the swing member 31 of the holding platform 3, and a transmission shaft 512 that is connected between the motor 511 and the eccentric cam 513. The motor 511 is operable to drive rotation of the eccentric cam 513 via the transmission shaft 512 to generate a mechanical wave to the holding platform 3. The frequency of the mechanical wave generated by the vibrating unit 51 is proportional to the rotation speed of the eccentric cam 513, and therefore is adjustable by changing the rotation speed of the eccentric cam 513.

The additive manufacturing device 4 includes a raw material supplying unit 41, and a melting unit 42 for melting a raw material powder 8 delivered by the raw material supplying unit 41 to the holding platform 3 to form at least two deposited layers 71 that constitute the additive object 7.

In this embodiment, the melting unit 42 includes a gas delivering member 421, a chamber 422 that receives an inert gas 9 delivered by the gas delivering member 421 and the raw material powder 8 delivered by the raw material supplying unit 41 and that delivers the raw material powder 8 to the holding platform 3, and a melting gun 423 that cooperates with the holding platform 3 to generate a plasma transferred arc adapted to melt the raw material powder 8 delivered by the chamber 422. The inert gas 9 is a protective gas that is discharged from the melting gun 423 and that covers the additive object 7 for preventing contaminants from being trapped in the additive object 7.

The driving module 6 is disposed on the machine body 2, and includes a first driving unit 61, a second driving unit 62, a third driving unit 63 and a fourth driving unit 64. The first driving unit 61 is coupled to and drives the melting unit 42 to move along an X-axis and a Y-axis that are perpendicular to each other. The second driving unit 62 is coupled to and drives the melting unit 42 to move along a Z-axis that is perpendicular to the X-axis and the Y-axis. The third driving unit 63 is coupled to and drives the swing member 31 to rotate about the X-axis. The fourth driving unit 64 is coupled to and drives the carrier 32 to rotate about the Z-axis.

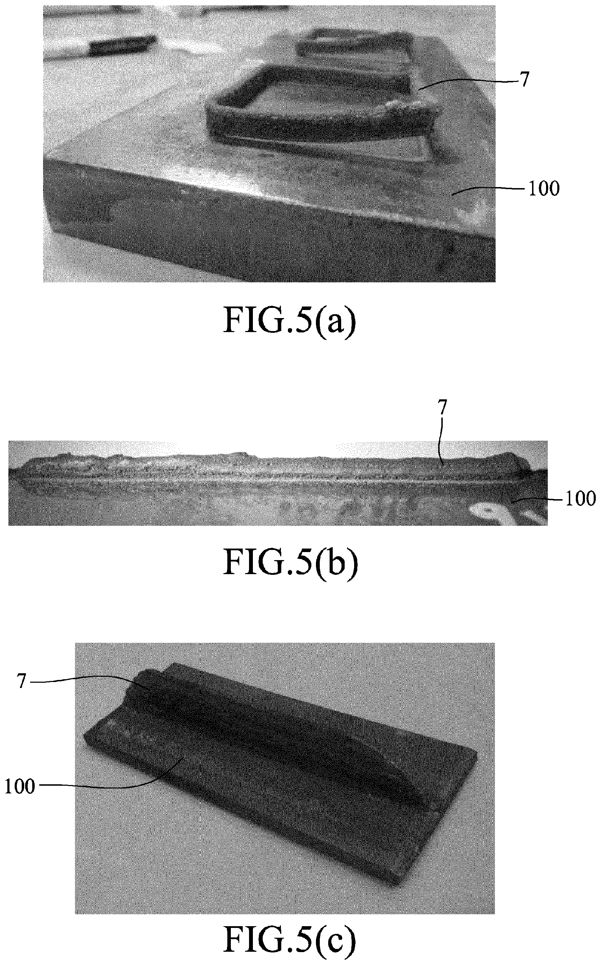

In operation, by controlling the driving module 6, the melting gun 423 of the additive manufacturing device 4 can be positioned to a desired location relative to the carrier 32 of the holding platform 3 to create the additive object 7 with a desired outline. The supplying of the raw material powder 8 and generation of plasma transferred arc has been described above and therefore will not be further presented. A workpiece 100 (see FIGS. 5(a) to 5(c)) may be provided to be disposed on the carrier 32 for the additive object 7 to be formed on the workpiece 100. During the process of forming the deposited layers 71, the vibrating unit 51 generates the mechanical wave that is induced by a non-resonant wave having a frequency lower than 90 Hz, and induces in the deposited layers 71 an induced mechanical wave that has a frequency ranging from 500 Hz to 900 Hz.

It is worth mentioning that, during the formation of the deposited layers 71, simultaneous induction of the mechanical wave in the deposited layers 71 provides the benefits of lower stress, lower deformation and finer grain size to the deposited layers 71.

In this embodiment, the additive manufacturing machine may further include a cooler 10 for cooling the melting unit 42 to avoid overheating of the melting unit 42 during its operation.

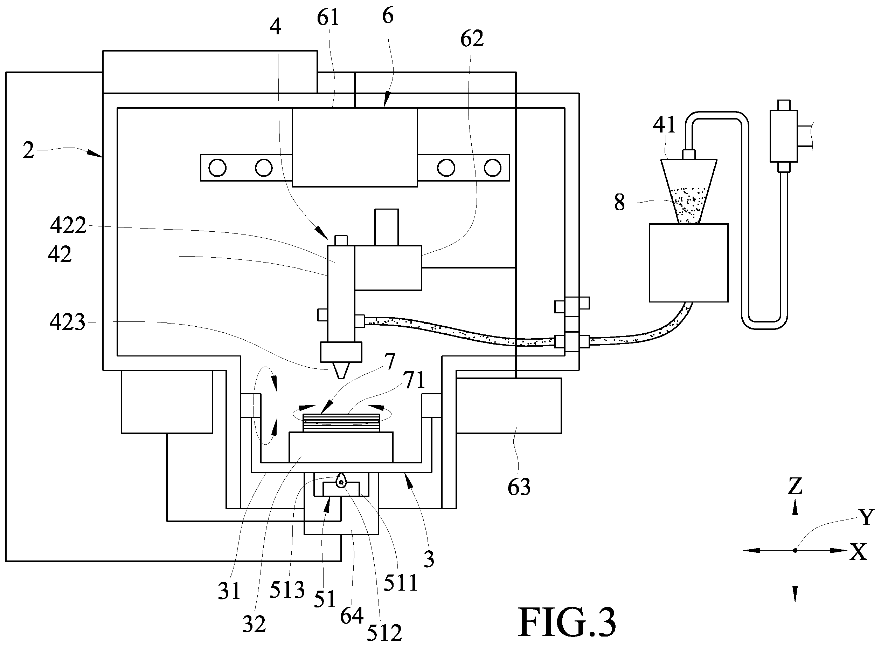

Referring to FIG. 3, a second embodiment of the additive manufacturing machine according to the present disclosure has a structure modified based on that of the first embodiment.

In the second embodiment, the gas delivering member 421 and the cooler 10 are omitted, and the melting unit 42 is a laser source that generates a laser beam to melt the raw material powder 8.

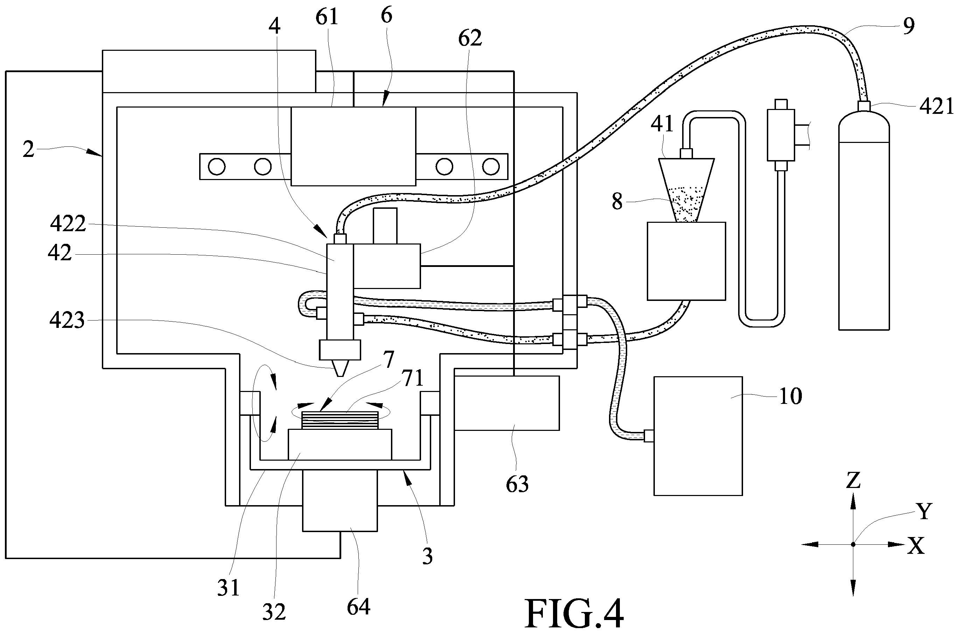

Referring to FIG. 4, a third embodiment of the additive manufacturing machine according to the present disclosure has a structure modified based on that of the first embodiment.

In the third embodiment, the vibrating module 5 is omitted. Moreover, the plasma transferred arc is generated at a voltage greater than 20 Volts. In this embodiment, the plasma transferred arc may be generated at a voltage of 30 Volts. A high voltage results in higher energy when melting the raw material powder 8, and minimizes the possibility of forming keyholes or welding puddles during manufacturing of the additive object 7, thereby improving the quality of the additive object 7.

A set of experiments was conducted to demonstrate the effects of the first and second embodiments. Specimen A was manufactured by a conventional laser additive manufacturing machine, and specimens B and C were respectively manufactured by the second and first embodiments of this disclosure. Process parameters are summarized below.

| | Specimen A | Specimen B | Specimen C |
|---|---|---|---|
| Raw Material | JIS SKD61, particle size: 45 to 105 µm | | |
| Powder Delivering Parameters | Carrier gas flow: 3.0 L/min | | |
| | Powder flow: 40.203 g/min | | |
| Moving Parameters | Melting gun moving speed: 9 mm/sec | | |
| | Melting gun moving distance: 100 mm | | |
| | Working distance: 26 mm | | |
| | Z-axis increment: 1.5 mm | | |
| Power of Laser | 2000 W | | |
| Introduction of Vibration Wave | No | Yes | Yes |

Referring to FIGS. 5(a) to 5(c), it is obvious that the Specimen A (shown in FIG. 5(a)) manufactured by the laser additive manufacturing machine fails to be firmly attached to the workpiece 100, and, on the other hand, the Specimens B and C (respectively shown in FIGS. 5(b) and 5(c)) manufactured by the second and first embodiments of this disclosure have superior bonding to the workpiece 100.

A set of experiments was conducted to demonstrate the stress relief effect by the vibrating unit 51. Specimens C1 to C4 were manufactured by the second embodiment with different vibrating modes as summarized below.

| | Specimen C1 | Specimen C2 | Specimen C3 | Specimen C4 |
|---|---|---|---|---|
| Vibrating Mode | No Vibration | Resonance | 1/3 height of Resonance Vibration Amplitude | Excited High Frequency Wave |
| Input Vibrating Frequency (Hz) | 0 | 64.1 | 53.7 | 60.3 |
| Measured Stress (Mpa) | 209 | 129 | 115 | 94 |

Specimen C1 was manufactured without the introduction of wave vibrations, and has a measured stress of 209 MPa. In contrast, Specimens C2 to C4 manufactured with the introduction of wave vibrations have measured stress values lower than that of Specimen C1. It is worth mentioning that, in the process of manufacturing Specimen C4, an excited high frequency wave, which is induced by the input non-resonant wave, was introduced, resulting in a lowered measured stress value.

In view of the foregoing, the additive object 7 can be made by introducing the mechanical wave, which is a non-resonant wave having a frequency lower than 90 Hz, to vibrate the holding platform 3, melting the raw material powder 8 into the melted raw material by using one of the plasma transferred arc and the laser beam, and then, depositing the melted raw material in multiple layers on the holding platform 3 vibrated by the mechanical wave to form the additive object 7.

Alternatively, the additive object 7 may be made by melting the raw material powder 8 into the melted raw material by using the plasma transferred arc, and depositing the melted raw material in multiple layers on the holding platform 3 to form the additive object 7 without use of the vibrating unit 51.

In summary, the introduction of the mechanical wave during formation of the deposited layers provides the benefits of lower stress, lower deformation and finer grain size to the deposited layers 71, thereby obtaining the additive object 7 of better quality. The use of the plasma transferred arc can lower the cost of manufacturing equipment, increase manufacturing efficiency, and can still obtain the additive object 7 with desired quality.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment, " "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects.

While the disclosure has been described in connection with what are considered the exemplary embodiments, it is understood that this disclosure is not limited to the disclosed embodiments but is intended to cover various arrangements included within the spirit and scope of the broadest interpretation so as to encompass all such modifications and equivalent arrangements.

## Claims

1. An additive manufacturing method for making an additive object (7), **characterized by**:
introducing a mechanical wave to vibrate a holding platform (3);
melting a raw material powder into a melted raw material; and
depositing the melted raw material in multiple layers on the holding platform (3) vibrated by the mechanical wave to form the additive object (7).

2. The additive manufacturing method as claimed in Claim 1, **characterized in that** melting the raw material powder is conducted by using one of a plasma transferred arc and a laser beam.

3. The additive manufacturing method as claimed in Claim 1, **characterized in that** the mechanical wave is a non-resonant wave having a frequency lower than 90 Hz.

4. An additive manufacturing machine adapted to form an additive object (7), said additive manufacturing machine **characterized by**:
a holding platform (3); and
an additive manufacturing device (4) including
a raw material supplying unit (41), and
a melting unit (42) including
a gas delivering member (421),
a chamber (422) that receives an inert gas delivered by said gas delivering member (421) and a raw material powder delivered by said raw material supplying unit (41) and that supplies the raw material powder to said holding platform (3), and
a melting gun (423) that cooperates with said holding platform (3) to generate a plasma transferred arc adapted to melt the raw material powder supplied from said chamber (422) to form at least two deposited layers (71) that constitute the additive object (7) and that are disposed on said holding platform (3).

5. The additive manufacturing machine as claimed in Claim 4, **characterized in that** said plasma transferred arc is generated at a voltage greater than 20 Volts.

6. The additive manufacturing machine as claimed in Claim 4, further **characterized by** a first driving unit (61) that is coupled to and drives said melting unit (42) to move along an X-axis and a Y-axis, **characterized in that** the X-axis and the Y-axis are perpendicular to each other.

7. The additive manufacturing machine as claimed in Claim 6, further **characterized by** a second driving unit (62) that is coupled to and drives said melting unit (42) to move along a Z-axis, **characterized in that** the Z-axis is perpendicular to the X-axis and Y-axis.

8. The additive manufacturing machine as claimed in Claim 7, further **characterized by** a machine body (2), a third driving unit (63) and a fourth driving unit (64),
**characterized in that** said holding platform (3) includes a swing member (31) that is rotatably disposed on said machine body (2), and a carrier (32) that is co-rotatably disposed on said swing member (31), said third driving unit (63) being coupled to and driving said swing member (31) to rotate about the X-axis, and
**characterized in that** said fourth driving unit (64) is coupled to and drives said carrier (32) of said holding platform (3) to rotate about the Z-axis.

9. An additive manufacturing machine adapted to form an additive object (7), said additive manufacturing machine **characterized by**:
a holding platform (3);
an additive manufacturing device (4) including a raw material supplying unit (41), and a melting unit (42) for melting a raw material powder delivered by said raw material supplying unit (41) to said holding platform (3) to form at least two deposited layers (71) that constitute the additive object (7); and
a vibrating unit (51) that is in contact with said holding platform (3) and that generates a mechanical wave transferred through said holding platform (3) to the deposited layers (71).

10. The additive manufacturing machine as claimed in Claim 9, **characterized in that** the mechanical wave generated by said vibrating unit (51) is a non-resonant wave having a frequency lower than 90 Hz.

11. The additive manufacturing machine as claimed in Claim 10, **characterized in that** said vibrating unit (51) includes a motor (511), an eccentric cam (513) that is in contact with said holding platform (3), and a transmission shaft (512) that is connected between said motor (511) and said eccentric cam (513), saidmotor (511) being operable to drive rotation of said eccentric cam (513) via said transmission shaft (512) to generate the mechanical wave to said holding platform (3).

12. The additive manufacturing machine as claimed in Claim 9, **characterized in that** said melting unit (42) generates a laser beam that is adapted to melt the raw material powder.

13. The additive manufacturing machine as claimed in Claim 9, **characterized in that** said melting unit (42) includes a gas delivering member (421), a chamber (422) that receives an inert gas delivered by said gas delivering member (421) and the raw material powder delivered by said raw material supplying unit (41) and that delivers the raw material powder to said holding platform (3), and a melting gun (423) that cooperates with said holding platform (3) to generate a plasma transferred arc adapted to melt the raw material powder delivered by said chamber (422).

14. The additive manufacturing machine as claimed in Claim 9, further **characterized by** a first driving unit (61) that is coupled to and drives said melting unit (42) to move along an X-axis and a Y-axis, **characterized in that** the X-axis and the Y-axis are perpendicular to each other.

15. The additive manufacturing machine as claimed in Claim 14, further **characterized by** a second driving unit (62) that is coupled to and drives said melting unit (42) to move along a Z-axis, **characterized in that** the Z-axis is perpendicular to the X-axis and the Y-axis.

16. The additive manufacturing machine as claimed in Claim 14, further **characterized by** a machine body (2), a third driving unit (63) and a fourth driving unit (64),
**characterized in that** said holding platform (3) includes a swing member (31) that is rotatably disposed on said machine body (2), and a carrier (32) that is co-rotatably disposed on said swing member (31), said third driving unit (63) being coupled to and driving said swing member (31) to rotate about the X-axis, and
**characterized in that** said fourth driving unit (64) is coupled to and drives said carrier (32) of said holding platform (3) to rotate about the Z-axis.
